# EUROPEAN PATENT APPLICATION

(11) **EP 4 566 454 A1**
(43) Date of publication of application: **11.06.2025**
(21) Application number: 24216863.1
(22) Date of filing: 02.12.2024
(51) Int. Cl.: A23C 11/10, A23L 7/104

(54) **PRODUCING LIQUID OAT BASE FOR HUMAN CONSUMPTION**

(30) Priority: 06.12.2023 EP 23214693
(71) Applicant: Tetra Laval Holdings & Finance S.A., 1009 Pully (CH)
(72) Inventor: LUNDAU, Jeanette, 22186 Lund (SE); LANZINGH, Christer, 22186 Lund (SE); FUNKQUIST, Ola, 22186 Lund (SE); CHEAIB, Rana, 22186 Lund (SE)
(74) Representative: Tetra Pak - Patent Attorneys SE

(57) **Abstract**

A method of manufacturing a liquid oat base for human consumption is provided. By the method, a system is operated to produce the liquid oat base from oat raw material comprising at least one of oat kernels or whole oat flour. According to the method, the oat raw material is processed with water and one or more enzymes into a slurry (S22), and a hydrolyzation of the slurry is performed, by the one or more enzymes, during a hydrolyzation time period, HTP (S24). During at least part of the HTP, the slurry is processed by high-pressure homogenization (S25). At the end of the HTP, the slurry is processed for deactivation of the one or more enzymes (S26), whereupon the liquid oat base is obtained from the slurry. By performing the high-pressure homogenization during the HTP, the system produces minimum, or no, solid residue ("okara").

## Description

### Technical Field

The present disclosure generally relates to the field of plant-based products for human consumption, and in particular to resource-efficient production of a liquid oat base.

### Background Art

Oats is a type of cereal grain, specifically the edible seed of oat grass. Consumption of oats has increased significantly in recent times. Oats is associated with various health effects, including reduction of blood cholesterol levels, reduction of blood glucose rise, and gut health. Further, compared to other grains, oats is well-tolerated, even by people having celiac disease.

Oat-based beverages, also known as oat milk or oat drink, may be produced by soaking milled oat grains in water to extract nutrients. Enzymes may be added to the mixture to break down gelatinized oat starch into dextrins, to be broken down into simpler sugars. Then, a liquid fraction is extracted from the mixture by fiber separation, for example, by use of a conventional decanter. The liquid fraction is an oat extract, also known as "liquid oat base", which may be used as a starting material for further formulation into oat-based beverages or other oat-based products.

The conventional extraction process produces huge amounts of solid by-product or residue through the fiber separation. The solid residue is also known as "oat okara". The residue is normally discarded. It may alternatively be used as animal feed. Regardless, the conventional process creates significant environmental waste and disposal costs for the industry.

It is known that the residual fraction may contain considerable amounts of protein, fiber, fat, and other nutrients that may be of value for human consumption. WO2023/021240 proposes a technique of processing the oat okara into an oat-based dispersion to be used for formulation of food products.

### Summary

It is an objective to at least partly overcome one or more limitations of the prior art.

One such objective is to reduce the environmental cost to produce oat-based food products.

Another objective is to reduce the amount of residue that is produced in production of liquid oat base from oat kernels or whole oat flour.

One or more of these objectives, as well as further objectives that may appear from the description below, are at least partly achieved by a method for producing a liquid oat base for human consumption, and a corresponding system, according to the independent claims, embodiments thereof being defined by the dependent claims.

The present disclosure is based on the surprising finding by the Applicant that the amount of residue in production of a liquid oat base from oat kernels or whole oat flour can be reduced by combining hydrolyzation with high-pressure homogenization. By reducing the amount of residue, the environmental cost of the production process is reduced, since less waste needs to be handled. Further, a larger fraction of the raw material ends up in the liquid oat base, resulting in an increased yield of the production process. The improved use of the raw material may also increase the nutritional value of the liquid oat base. It is of considerable value to be able to produce the liquid oat base from oat kernels or whole oat flour, which are obtained without major preprocessing of oat grains.

The Applicant has spent considerable research efforts on finding ways of improving or optimizing the novel production process, for example to minimize the amount of residue or to improve the mouthfeel of the liquid oat base. For example, it should be avoided that the liquid oat base is produced to give a gritty or sandy mouthfeel. Preferably, a smooth mouthfeel is desired.

Still other objectives and technical advantages as well as aspects, features, and embodiments will appear from the following detailed description as well as from the drawings.

### Brief Description of the Drawings

Fig. 1 is a sequence diagram of a reference method for manufacturing a liquid oat base.
Fig. 2A is a sequence diagram of an example method for manufacturing a liquid oat base from whole oat flour in accordance with embodiments, and Fig. 2B is a sequence diagram of an example method for processing a liquid oat base into a final product.
Fig. 3 is a flow chart of an example method corresponding to the methods in Fig. 2A and Fig. 10.
Fig. 4 is a block diagram of an example system for performing the method in Fig. 3.
Fig. 5A is a section view of an internal structure of a high-pressure homogenizer, and Fig. 5B is an enlarged view of a portion in Fig. 5A.
Figs 6-7 are block diagrams of alternative sub-systems for use in the system of Fig. 4.
Fig. 8 is a bar chart of measured particle size (D90) for a commercial product and final products produced from liquid oat bases manufactured in accordance with embodiments.
Fig. 9A is a plot of particle size distribution, PSD, in a commercial product and in a final product produced from a liquid oat base manufactured in accordance with embodiments, and Fig. 9B is a plot of PSD in a liquid oat base manufactured with and without addition of fiber-digesting enzymes.
Fig. 10 is a sequence diagram of an example method for manufacturing a liquid oat base from oat kernels in accordance with embodiments.
Fig. 11A is a block diagram of an example system for performing the method in Fig. 10, and Fig. 11B is a block diagram of an example sub-system for use in the system of Fig. 11A.
Fig. 12 is a plot of PSD in a slurry before hydrolyzation, as well as after combined hydrolyzation and high-pressure homogenization, in the system of Fig. 11A.
Fig. 13A is a plot of PSD in a slurry before hydrolyzation in the systems of Fig. 4 and Fig. 11A, respectively, and Fig. 13B is a plot of PSD in a slurry after combined hydrolyzation and high-pressure homogenization in the systems of Fig. 4 and Fig. 11A, respectively.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

Like reference signs refer to like elements throughout.

Before describing embodiments in more detail, a few definitions will be given.

As used herein, "oat kernels" are hull-free kernels of oats, *Avena sativa.* "Oat kernels" can also be referred to as de-hulled oat, or oat groats, which can have any size. Thus, "oat kernels" may be whole groats, cut, flaked or otherwise shaped oat groat which has been de-hulled.

As used herein, "whole oat flour" is flour made from de-hulled oat, i.e. from oat groat. Thus, all parts of the oat but the hull form part of the "whole oat flour". In embodiments, the whole oat flour has a particle size (D90, dry) in the range of 500-800 µm.

As used herein, a "liquid oat base" or "oat base" is a liquid that is suitable as starting material for further formulation into oat beverages or other oat-based products for human consumption. The liquid oat base may be seen as a "precursor liquid" for a final oat-based product. In some embodiments, the liquid oat base is a suspension. Typically, the liquid oat base lacks one or more properties that make it enjoyable for human consumption, for example in terms of taste and/or texture.

As used herein, "slurry" refers to a mixture of solids denser than water suspended in liquid.

As used herein, "total solids" or TS is used in its ordinary meaning and is a measure of all the suspended, colloidal, and dissolved solids in a sample. The total solids content of a sample is typically determined as the amount of solids remaining after heating the sample at 105°C to constant weight.

The term "D90" is used in its ordinary meaning and is a measure of particle size. The D90 value for a mixture designates that 90% of the particles in the mixture have a diameter or size of less than the D90 value. In some embodiments, the particle size is given by laser diffraction measurements.

As used herein, a "high-pressure homogenization" refers to a process in which a fluid is forced under high pressure through a narrow slot or gap, which causes a breakdown of the particles in the fluid due to cavitation, shearing, and collision. Conventionally, the pressure is in the range of 40-2000 bar. Correspondingly, a "high-pressure homogenizer" is a device configured to perform high-pressure homogenization. Such a device may comprise a mechanical structure that defines the gap, which may or may not be adjustable, and a pumping mechanism for generating the pressure to drive the fluid into the structure and through the gap.

As used herein, a "high-shear mixer" comprises a mixing device, for example in form of a rotor, paddle, propeller, vane, turbine etc., such that the mixing device has a peripheral speed of at least 10 m/s, at least 15 m/s, or at least 20 m/s. The mixing device may in some implementations be surrounded by a stator for increasing the high shear mixing effect. The high-shear mixer is a batch mixer that is arranged in a vessel to process fluid material in batches, possibly with recirculation of the fluid material during mixing.

As used herein, a "disc mill" refers to a perforated disc mill, in which a knife element rotates close to a perforated disc to process an incoming material as it is feed axially towards the rotating knife. This creates cutting and impact forces that reduce the size of the material and force the material through holes or apertures in the disc. Perforated discs are available with a range of aperture sizes.

As used herein, a "colloid mill" is used in its ordinary meaning and comprises a static cone (stator) and a rapidly rotating cone (rotor), which form a gap in which fluid material is milled ("wet milling"). In a cross-toothed colloid mill, at least one of the stator or rotor comprises a surface pattern of crossed grooves forming a cross-toothed pattern.

As used herein, a range that is defined to extend from a first value to a second value is intended to include the first and second values.

In the drawings to be described hereinbelow, input and output materials are represented by boxes with rounded corners, whereas rectangular boxes represent processing steps or system components. Any methods described herein may be computer-implemented and performed by a control device. The control device may be implemented by hardware or a combination of software and hardware. For example, the control device may comprise processor circuitry, computer memory and a signal interface. A control program comprising computer instructions may be stored in the computer memory and executed by the processor circuitry to perform methods and procedures as described herein, through generation and output of control signals via the signal interface. The control program may be supplied to the control device on a computer-readable medium, which may be a tangible (non-transitory) product (e.g. magnetic medium, optical disk, read-only memory, flash memory, etc.) or a propagating signal.

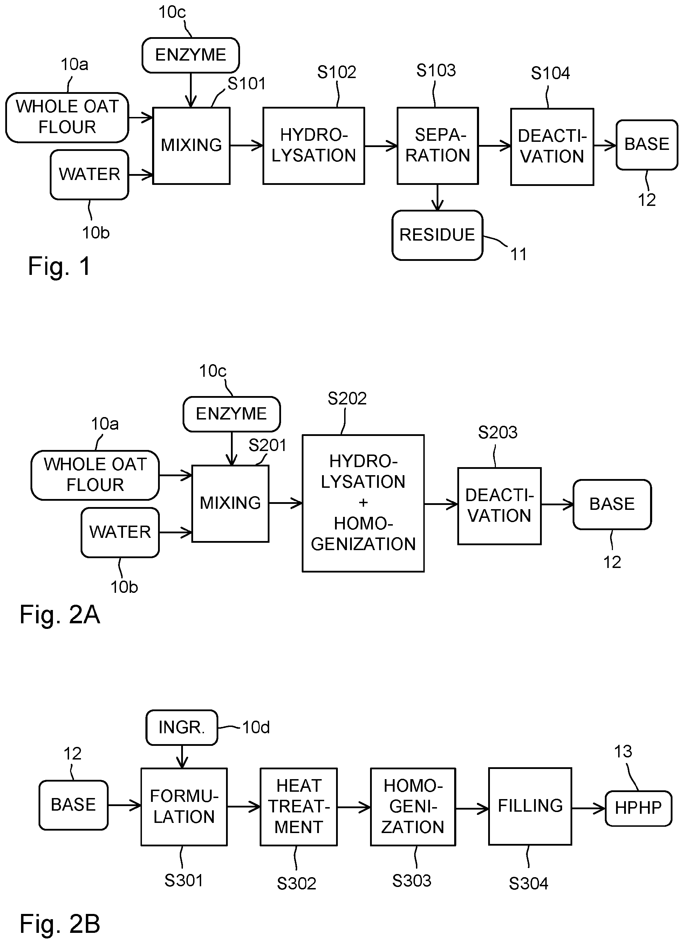

Fig. 1 is a sequence diagram of a reference method for producing a liquid oat base from whole oat flour. The reference method includes a mixing step S101, in which whole oat flour 10a is mixed with hot water 10b and one or more enzymes 10c into a slurry. In the mixing step S101, the flour 10a is mechanically processed to achieve a desired particle size in the slurry. The mixing step S101 is followed by a hydrolyzation step S102, in which the one or more enzymes 10c added to the slurry breaks down carbohydrates in the slurry into component sugar molecules by hydrolysis. Thus, the enzymes 10c typically include a carbohydrase. A separation step S103 is performed to separate the slurry into liquid and solid residue (oat okara) 11, which is removed from further processing. The separation step S103 is designed to remove insoluble solids that are larger than a predefined size, for example in the range of 50-200 µm. The separation step S103 may involve centrifugation, in which the slurry is subjected to high-speed centrifugal forces. For example, the separation step S103 may be performed by use of one or more decanters. In a deactivation step S104, the liquid from the separation step S103 is processed for enzyme deactivation. The deactivation thereby terminates the hydrolyzation step S102. The deactivation step S104 may involve heat treatment, in which the liquid is heated to a predefined deactivation temperature for a predefined time period, as is known in the art. The heat treatment in step S104 may involve steam injection and/or be performed in one or more heat exchangers. The deactivated liquid forms the liquid oat base 12, which is output for further processing. In a variant, the separation step S103 is performed after the deactivation step S104.

The separation step S103 is performed to ensure an adequate particle size in the liquid oat base 12. For example, the particle size may be stipulated to give the liquid oat base 12 a smooth mouthfeel, or at least to avoid an unpleasant mouthfeel. The separation step S103 typically removes at least 10-20% by weight of the solid content of the oat raw material 10a. Thus, large amounts of residue 11 are generated as a by-product of the reference method in Fig. 1. No further use of the residue 11 is made in the reference method, so the residue 11 needs to be handled for disposal. This is costly in terms of labor and equipment. Further, the separation step 103 adds cost to the reference method by the need for separation equipment. It is also realized that separation of residue prevents full utilization of the raw oat material 10a; the more residue 11 is generated, the larger is the waste of raw oat material 10a.

Fig. 2A is a sequence diagram of an example method for producing a liquid oat base 12 in accordance with an embodiment. Notably, the method in FIG. 2A does not involve a separation step (cf. S103 in Fig. 1), while still producing a liquid oat base 12 with a suitable mouthfeel. In the illustrated example, the method comprises three sequential steps S201-S203.

In step S201, which is a mixing step, whole oat flour 10a is mixed with water 10b, which may pre-heated or not, and one or more enzymes 10c. By step S201, the flour 10a and the water 10b are subjected to a mixing process that mechanically disintegrates the flour 10a to produce a slurry from the flour 10a and the water 10b, with the enzymes 10c forming part of the slurry. The mixing step S201 may or may not be the same as step S101 in Fig. 1. The water 10b may contain additional substances. Thus, generally, the input material 10b may be a water-containing liquid of any kind.

In step S202, the slurry from step S201 is subjected to enzymatic treatment due to the and one or more enzymes 10c. In the context of the present disclosure, the enzymatic treatment is also denoted "hydrolysis" or "hydrolyzation". Hydrolysis is a process in which a molecule of water breaks one or more chemical bonds. The enzymatic treatment comprises adding one or more enzymes 10b to the slurry and allowing the respective enzyme to break down components of the slurry for a predefined hydrolyzation time period. It is currently believed that an effective enzymatic treatment is achieved by adding the respective enzyme in an amount of 0.5%-3% by weight of the slurry. Control parameters of the enzymatic treatment, such as temperature, pH, and treatment time, are adapted to the respective enzyme. In some embodiments, like in step S101 in Fig. 1, one or more enzymes 10c are added to the slurry to break down carbohydrates (starch) in the slurry into component sugar molecules by hydrolysis. Thus, step S202 results in a saccharification of the slurry.

As indicated in Fig. 2A, step S202 also involves subjecting the slurry to homogenization during the hydrolyzation time period, specifically high-pressure homogenization. Such combined hydrolyzation and homogenization has been found to produce a slurry with a particle size and particle size distribution that mitigates or obviates the need to process the mixture for separation of residue.

The method further comprises a deactivation step S203, in which the slurry from step S202 is processed for enzyme deactivation. Step S203 may be identical to step S104 in Fig. 1. The deactivation step S203 terminates the hydrolyzation that was initiated in step S202. The liquid oat base 12 is obtained when step S203 is completed.

In an alternative embodiment, not shown, the method may include a separation step analogous to step S103 in Fig. 1. The separation step may be performed before and/or after step S202. However, compared to the reference method in Fig. 1, the amount of residue is significantly less, by the provision of step S202. Typically, if present, a separation step in the method of Fig. 2A will remove less than 10% by weight of the solid content of the oat raw material 10a.

Fig. 2B is an example method for final processing of a liquid oat base 12 into a final product 13. In the following, a final product 13 that originates from a liquid oat base produced by high-pressure homogenization during hydrolyzation is also denoted an HPH product, abbreviated HPHP. The method in Fig. 2B is a non-limiting example, given to exemplify how the liquid oat base 12 may be used to produce an HPH product 13. The skilled person understands that the included steps and the implementation of the respective step depend on the type of HPH product 13 to be produced. The final processing may be arranged to produce the HPH product 13 to exhibit stability, high nutritional quality, and pleasant mouthfeel. The HPH product 13 may, for example be a beverage, a yoghurt substitute, a cream substitute, a custard, a sour cream or soured cream substitute, a cheese, or an ice cream. In Fig. 2B, the HPH product 13 is a beverage.

The example method in Fig. 2B comprises a formulation step S301 in which one or more ingredients 10d are added to and mixed into the base 12. The ingredients 10d may include one or more of vegetable oil, flavoring, sweetener, salt, thickener, stabilizer, vitamin, or mineral. In step S302, the mixture from step S301 is subjected to heat treatment for food preservation, for example by pasteurization, ultra-pasteurization or ultra-high temperature (UHT) processing. The method may further comprise a homogenization step S303, in which the mixture from step S301 or S302 is processed to ensure that for example fat is evenly distributed throughout the mixture. Step S303 may involve high-pressure homogenization, typically at a lower pressure than the homogenization in step S202. The method may further comprises a filling step S304, in which the HPH product from step S303 is filled and enclosed in a suitable package for distribution, including but not limited to bottles of glass or plastic, metal cans, or carton-based packages.

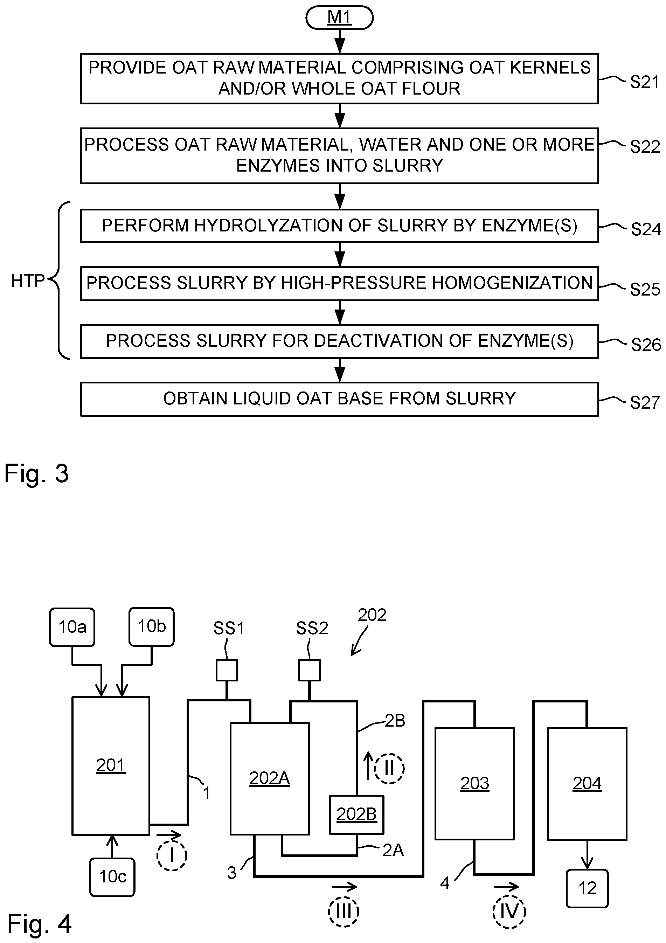

Fig. 3 is a flowchart of an example method M1 for producing a liquid oat base in accordance with embodiments. The method M1 is generally applicable for producing the liquid oat base from either whole oat flour or oat kernels, or a combination of whole oat flour and oat kernels. In some embodiments, the method M1 corresponds to the method described above with reference to Fig. 2A.

In step S21, oat raw material is provided. The oat raw material comprises at least one of oat kernels or whole oat flour. Notably, the oat raw material does not include any part of the hull of oats.

In step S22, the oat raw material, water and one or more enzymes are processed into a slurry. The water may be pure water or included in a water-based liquid as described with reference to Fig. 2A. The one or more enzymes may be included in the water prior to being combined with the oat raw material. The enzyme(s) may also be admixed into the slurry in a tank or be supplied to a piping while the slurry is pumped through the piping. The respective enzyme is selected to result in a hydrolyzation of the slurry.

In step S24, a hydrolyzation of the slurry is performed by the one or more enzymes during a hydrolyzation time period, HTP. The HTP may be a predefined time period. The HTP may be started at the time by which the enzymes come into contact with the oat raw material or at a later time if the enzymatic activity is not started until the properties of the slurry has been adjusted to fit the enzyme(s), for example in terms of temperature, pH, etc.

In step S25, during at least part of HTP, the slurry is processed by high-pressure homogenization.

In step S26, the slurry is processed for deactivation of the one or more enzymes. Step S26 results in a termination of the hydrolyzation and is thus performed at the end of HTP.

In step S27, the liquid oat base is obtained from the deactivated slurry from step S26. Step S27 may comprise collecting the liquid oat base in a tank or other vessel for subsequent final processing into an HPH product (cf. Fig. 2B), or directly conveying the liquid oat base to a production line for final processing. Alternatively or additionally, step S27 may comprise further processing of the liquid oat base, for example by cooling or heat treatment.

By proper optimization of steps S22-S26, the method M1 produces a liquid oat base that includes at least 90%, 95% or 98% by weight of the solid content of the oat raw material. Thus, a small proportion, if any, of the solid content needs to be removed during production of the liquid oat base. Such removal may be performed as part of step S27, or intermediate steps S25 and S26. However, in some embodiments, for example as shown in Fig. 2A, the liquid oat base is manufactured without separation and removal of solid content from the slurry.

In some embodiments, step S25 is started with a time delay to the start of the HTP in step S24. The time delay will allow the enzymes to have an impact on the composition of the slurry before the high-pressure homogenization is started. This has been found to improve the ability of the high-pressure homogenization to reduce the particle size of the slurry. In some embodiments, the time delay is at least 30 minutes. Tests indicate that improved properties of the liquid oat base may be attained for a time delay of at least 40 minutes or at least 50 minutes.

In some embodiments, the HTP is set to be at least 75 minutes. Tests indicate that improved properties of the liquid oat base may be attained for an HTP of at least 90 minutes or at least 105 minutes.

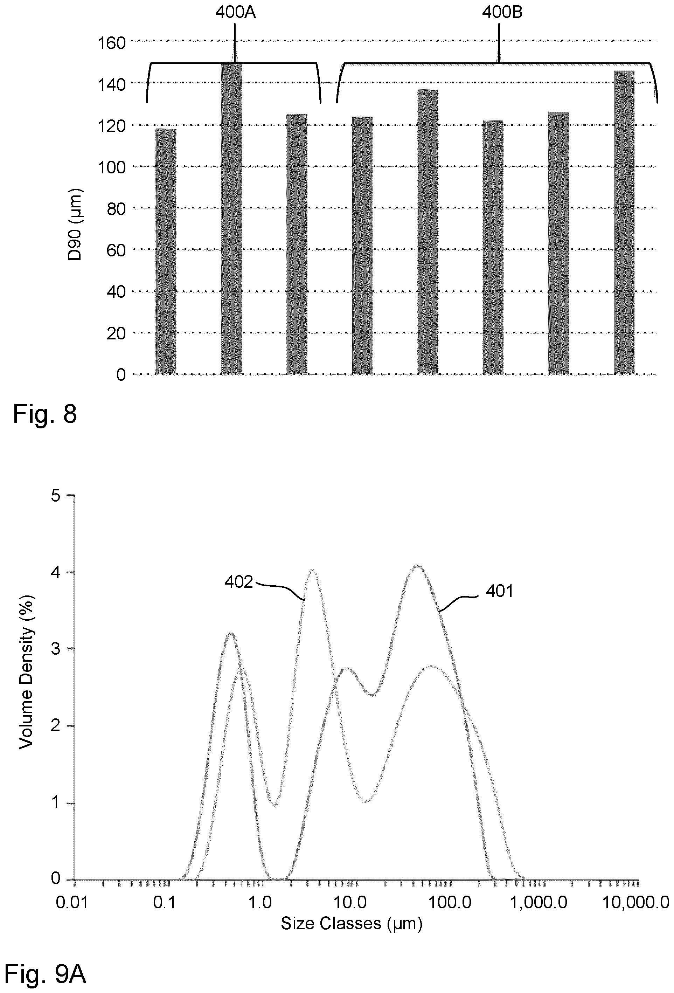

In some embodiments, the enzyme(s) added in step S22 comprises one or more carbohydrases that cause saccharification of starch by hydrolysis. Successful tests have been performed by adding an alfa-amylase and/or a glucoamylase to the slurry in step S22. In the tests, BAN^{®} 440 L from Novozymes was used as alfa-amylase, and AMG^{®} 300 L from Novozymes was used as glucoamylase. Some results of these tests will be presented and discussed below with reference to Figs 8-9 and 12-13. It is to be understood that any commercially available alfa-amylase and/or glucoamylase may be added to the slurry in step S22.

Fig. 4 is a block diagram of a system, which is configured to perform the method M1 based on whole oat flour 10a, water 10b and one or more enzymes. The system comprises a plurality of sub-systems, which are arranged to sequentially process ingredients into a liquid oat base 12 in accordance with the method M1. The ingredients include the flour 10a, the water 10b, and one or more enzymes 10c. The system comprises a first sub-system 201 which is configured to perform step S22. The first sub-system 201 includes a mixing device, which is operable to receive the flour 10a, the water 10b and one or more enzymes 10c and mix these ingredients into a slurry. In some embodiments, the mixing device is a high-shear mixer.

A supply line 1 extends from the first sub-system 201 to a hydrolyzation tank 202A in a second sub-system 202. The second sub-system 202 is configured to process the slurry that is generated by the for sub-system 201 in batches in accordance with steps S24-S25. As indicated by Roman numeral I, the system is configured to convey the slurry from the first sub-system 201 to the tank 202A along the supply line 1, for example by a pumping device (not shown). The size of the batch of slurry held in the tank 202A may be considerable, for example in the range of 1000-10000 m3. The tank 202A is operable to provide a suitable environment for the enzymes 10c to hydrolyze the slurry. In the illustrated example, the sub-system 201 is configured to admit one or more enzymes 10c. In a variant, not shown, the enzyme(s) 10c may be added to the supply line 1 or in the tank 202A. A feed line 2A extends from a bottom portion of the tank 202A to an inlet of a high-pressure homogenizer 202B, and a return line 2B extends from an outlet of the high-pressure homogenizer 202B to a top portion of the tank 202A. Thus, the combination of feed line 2A, homogenizer 202B and return line 2B forms a recirculation path for the slurry in the tank 202A. The homogenizer 202B comprises a pumping device (not shown), which is configured pressurize the slurry and drive the slurry through a homogenization device (not shown). The operation of the pumping device will also serve to circulate the slurry on the recirculation path, as indicated by Roman numeral II.

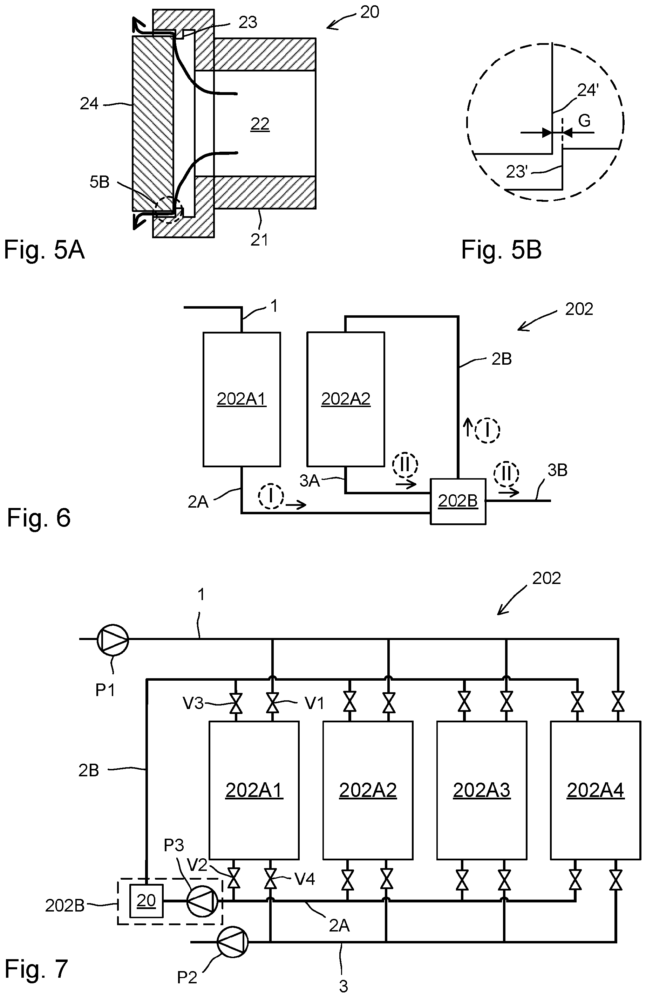

Fig. 5A is a section view of an example homogenization device 20 for use in the high-pressure homogenizer 202B of Fig. 4. Fig. 5B is an enlarged view of the encircled region 5B in Fig. 5A. The device 20 is configured to produce high flow velocity of a pressurized fluid through a small orifice or gap G ("homogenization gap"), as indicated by solid arrows. In the illustrated example, the device 20 comprises a hollow base 21 that defines an inlet channel 22 for the fluid. The inlet pressure ("backing pressure") of the fluid may be at least 100 bar and is generated by a pumping device (not shown) upstream of the inlet channel 22. Opposite to the inlet channel 22, the base 21 defines an outlet end, which is configured to receive a disc 24. The disc 24 is brought into close and precise proximity to a radial projection 23 on the outlet end, to define the gap G between a circumferential surface 23' of the radial protection 23 and a circumferential surface 24' of the disc 24. The position of the disc 24 may be adjustable in relation to the radial projection 23, to vary the size of the gap G. High-pressure homogenizers 202B that operate by driving a pressurized fluid through a homogenization gap are commercially available. Examples include Tetra Pak^{®} homogenizers with a HD 100 homogenizing device.

Reverting to Fig. 4, a transfer line 3 extends from the bottom portion of the tank 202A to a third sub-system 203 for enzyme deactivation in accordance with step S26. As indicated by Roman numeral III, the system is configured to convey the slurry from the tank 202A to the third sub-system 203 along the transfer line 3, for example by a pumping device (not shown). The third sub-system 203 may be of any conventional type. For example, the third sub-system 203 may comprise a heater for heating the slurry to a predefined deactivation temperature, and a holding cell for holding the slurry at the deactivation temperature for a predefined duration. The heater may be configured for direct heating, for example by injection of steam into the slurry, or indirect heating by one or more heat exchangers.

A transfer line 4 extends from the third sub-system 203 to a fourth sub-system 204, which is configured to perform step S27. As indicated by Roman numeral IV, the system is configured to convey the slurry from the third sub-system 203 to the fourth sub-system 204 along the transfer line 4, for example by a pumping device (not shown). The fourth sub-system 204 may, for example, comprise one or more of conventional equipment for cooling the slurry, conventional equipment for heat treatment of the slurry, or conventional equipment for intermediate storage of the liquid oat base. It is conceivable, but undesirable, that the fourth sub-system 204 comprises conventional equipment for separating a solid fraction from a liquid fraction of the slurry, with the liquid oat base being formed from the liquid fraction.

Fig. 4 also indicates locations of sampling ports SS1, SS2 that allow samples of the slurry to be taken. A first sampling port SS1 is located on the supply line 1 between the first and second sub-systems. Samples from the first sampling port SS1 represent the slurry before hydrolyzation. A second sampling port SS2 is located on the return line 2B in the second sub-system 202. Samples from the second sampling port SS2 represent the slurry after high-pressure homogenization during the hydrolyzation. Samples taken during system operation have been analyzed for determination of particle size, particle size distribution, and total solids. This data has been used to evaluate the impact of changes to operating parameters of the method M1, as performed by the system in Fig. 4. No separation of residue was performed in the system. The analysis of the samples have also been correlated to the quality of an HPH product that was produced from the liquid oat base, in accordance with the final processing in Fig. 2B. The quality of the HPH product was quantified in terms of mouthfeel, ranging from gritty to smooth. Based on this evaluation, a number of operating conditions have been identified, for which the method M1 is found to provide acceptable end results. These operating conditions are presented as embodiments in the following. The operating conditions may be applied in isolation or in any combination.

In some embodiments, the liquid oat base has a particle size, given as D90, of less than 200 µm. The end result is improved with smaller particle size. In some embodiments, the particle size of the liquid oat base is less than 150 µm or less than 100 µm, given as D90.

In some embodiments, the slurry has a total solids content in the range of 8%-45% by weight before the hydrolyzation (at port SS1). An even better end result may be attained when the slurry has a total solids content in the range of 12-20% by weight before the hydrolyzation. The upper limit of the total solids content may be set to ensure that the slurry is pumpable through the system.

In some embodiments, the slurry has a particle size, given as D90, of less than 1000 µm before the hydrolyzation (at port SS1). The end result is improved with smaller particle size. In some embodiments, the particle size of the slurry before hydrolyzation is less than 900 µm, 800 µm, or 700 µm, given as D90. At the same time, a smaller particle size at port SS1, requires better performance of the mixing device in the first sub-system 201. It is generally desirable to relax the requirement on the mixing device, since a small particle size at port SS1 may require a more advanced and thus costly mixing device. Also the throughput of the mixing device may decrease with decreasing particle size at port SS1. Therefore, in some embodiments, the slurry has a particle size, given as D90, that is at least 350 µm before hydrolyzation. In some embodiments, to further relax the requirement on the mixing device, the slurry has a particle size, given as D90, that is at least 400 µm, 450 µm, 500 µm, 550 µm, 600 µm, or 650 µm before hydrolyzation.

In some embodiments, the slurry is processed by the high-pressure homogenization at a backing pressure of at least 300 bar (30 MPa). Thus, in the example of Fig. 5A, the slurry is driven through the gap G at this backing pressure. The end result is typically improved with increasing backing pressure. In some embodiments, the backing pressure is at least 400 bar, 500 bar, or 600 bar. At the same time, power consumption increases with backing pressure. For this reason, it may be desirable to limit the backing pressure to 700 bar, 800 bar, 900 bar, or 1000 bar. In some embodiments, the slurry is driven, by the backing pressure, through a homogenization gap G with a size of 50-250 µm.

In some embodiments, the slurry is passed one time through the high-pressure homogenizer 202B in step S25. Tests indicate that the end result is improved when the slurry is passed more than one time through the high-pressure homogenizer 202B. Thus, in some embodiments, the slurry is passed N times through the high-pressure homogenizer 202B, with N > 1. Tests indicate a significant improvement of the end result when going from N = 1 to N = 2. Thus, in some embodiments, the slurry is passed at least twice through the high-pressure homogenizer 202B (N ≥ 2). Tests indicate that the cumulative improvement of the end result is minor for N > 3.

In the example of Fig. 4, step S25 is performed by circulating a batch of slurry, held in the tank 202A, through the high-pressure homogenizer 202B during a circulation time period. To achieve a predefined number of passes, N, of the batch through the high-pressure homogenizer 202B, the circulation time period may be set accordingly. In some embodiments, the circulation time period may be set as a function of the size of the batch in the tank 202A, and the flow rate of the slurry through the recirculation path, for example the flow rate of the slurry in the feed line 2A or the return line 2B. Here, it may be assumed that the slurry that is returned to the tank 202A on the recirculation path is not mixed with the existing slurry in the tank 202A. Under this non-mixing assumption, the number of passes, N, may be achieved by setting the circulation time period to N*V/D, with V being the size of the batch in the tank 202A, and D being the flow rate of the slurry through the recirculation path. It is to be noted the number N need not be an integer but may be a decimal number. The validity of the non-mixing assumption may be improved by designing the tank 202A to minimize mixing between returned slurry and existing slurry. For example, the return line 2B may be arranged to return the slurry at a top portion of the tank 202A, as shown in FIG. 4, optionally through a nozzle configured to distribute the slurry evenly in the top volume of the tank 202A.

As an alternative to recirculating the slurry through the high-pressure homogenizer 202B as shown in Fig. 4, the sub-system 202 may comprise two or more high-pressure homogenizers that are fluidly connected in series. Thereby, the number of passes of the slurry will be equal to the number of homogenizers. However, this will increase the cost of the system.

A further alternative of the sub-system 202 is shown in Fig. 6. Here, the sub-system 202 is configured to ensure that a batch of slurry is subjected to exactly two passes through a single high-pressure homogenizer 202B. This is achieved by use of two hydrolyzation tanks 202A1, 202A2, which are fluidly connected to the homogenizer 202B. The first tank 202A1 is connected to the feed line 1 to receive the slurry from the first sub-system (201 in Fig. 4). The feed line 2A extends to a first inlet of the homogenizer 202B, and the return line 2B extends from a corresponding first outlet to the second tank 202A2. A first supply line segment 3A extends from the second tank 202A2 to a second inlet of the homogenizer 202B, and a second supply line segment 3B extends from a corresponding second outlet to the third sub-system (203 in Fig. 4). The operation of the sub-system 202 is indicated by Roman numerals in Fig. 6. Roman numeral I indicates a first pass, in which the slurry is driven from the first tank 202A1 through the homogenizer 202B into the second tank 202A2. Roman numeral II indicates a second pass, in which the slurry is driven from the second tank 202A2 through the homogenizer 202B to the third sub-system. It is to be understood that the sub-system 202 may be expanded by addition of tank(s) to enable further passes through the homogenizer 202B. It may also be noted that the homogenizer 202B may be provided with control valves that are operable to selectively connect lines 2A, 2B or lines 3A, 3B to the pumping device and homogenization device in the homogenizer 202B. Alternatively, if the homogenizer 202B includes a single inlet and a single outlet, external valves may the arranged to selectively connect line 2A or line 3A to the inlet and selectively connect line 2B or 3B to the outlet.

Fig. 7 is a block diagram of an example sub-system 202 in accordance with an embodiment. The sub-system 202 comprises four hydrolyzation tanks 202A1-202A4.The following description is given for tank 202A1 but is equally applicable to the other tanks 202A2-202A4. The tank 202A1 is fluidly connected, via an on/off valve V1, to a feed line 1 from the first sub-system (201 in Fig. 4). The tank 202A1 is fluidly connected, via an on/off valve V2, to a feed line 2A that extends to a high-pressure homogenizer 202B. The tank 202A1 is fluidly connected, via an on/off valve V3, to a return line 2B that extends from the homogenizer 202B. The tank 202A1 is fluidly connected, via an on/off valve V4, to a supply line 3 that extends to the third sub-system (203 in Fig. 4). A first pump P1 is arranged in the feed line 1 to pump the slurry from the first sub-system 201 into the second sub-system 202. A second pump P2 is arranged in the supply line 3 to pump the slurry from the second sub-system 202 to the third sub-system 203. The homogenizer 202B comprises a third pump P3, which is operable to pressurize the slurry to a predefined backing pressure, and a homogenization device 20, which is configured to subject the pressurized slurry to a homogenization operation.

The sub-system 202 in Fig. 7 may be operated, by adequate control of the pumps P1-P3 and the valves V1-V4 of the respective tank 202A1-202A4, to perform combined hydrolyzation and high-pressure homogenization in the respective tank with a time offset between the tanks. For example, the tanks 202A1-202A4 may be sequentially filled with slurry from the feed line 1. While one tank is being filled, the slurry from another tank may be circulated through the homogenizer 202B on lines 24, 2B, and the slurry from yet another tank may be pumped into the supply line 3. This will increase the throughput of the second sub-system 202 and enable optimized utilization of the homogenizer 202B.

It is also conceivable to use pairs of tanks in the sub-system 202 of Fig. 7 in accordance with the embodiment in Fig. 6. Thus, by adequate control of the pumps P1-P3 and the valves V1-V4 of the respective tank 202A1-202A4, the sub-system 202 may be operated to perform combined hydrolyzation and high-pressure homogenization in pairs of tanks with a time offset between the pairs of tanks.

Fig. 8 is a bar chart of measured particle size (D90) for different oat beverages. The bars 400A represent different specimens of a commercially available oat beverage. The commercial product has a pleasant mouthfeel. As seen, the particle size lies in the range of 120-150 µm for different specimens of the same commercial product. The bars 400B represent HPH products that have been produced in accordance with the procedures in Figs 2A-2B, with 2 passes through a high-pressure homogenizer operated a backing pressures in the range of 200-600 bar. As seen, the HPH products have a particle size in the same range as the commercial product. The mouthfeel of the HPH product is at least comparable to the commercial product. Admittedly, mouthfeel is a subjective parameter but some tests indicate that the mouthfeel is actually improved in the HPH product compared to the commercial product.

Fig. 9A is a plot of measured particle size distribution, PSD, given as a volume density as a function of particle size. Curve 401 represents PSD in the commercial product, and curve 402 represents PSD in an HPH product produced in accordance with the procedures in Figs 2A-2B. As seen, the PSD differs significantly between the two products even if they have similar D90 values. Both of the PSDs exhibit three peaks, but the middle peak of the HPH product is larger, more distinct and shifted towards smaller particle sizes compared to the middle peak for the commercial product. It is also seen that the peak to the right, which represents the largest particle sizes, is smaller in the HPH product than in the commercial product. It is currently believed that the improved mouthfeel of the HPH product originates from the difference in PSD as exemplified in Fig. 9A.

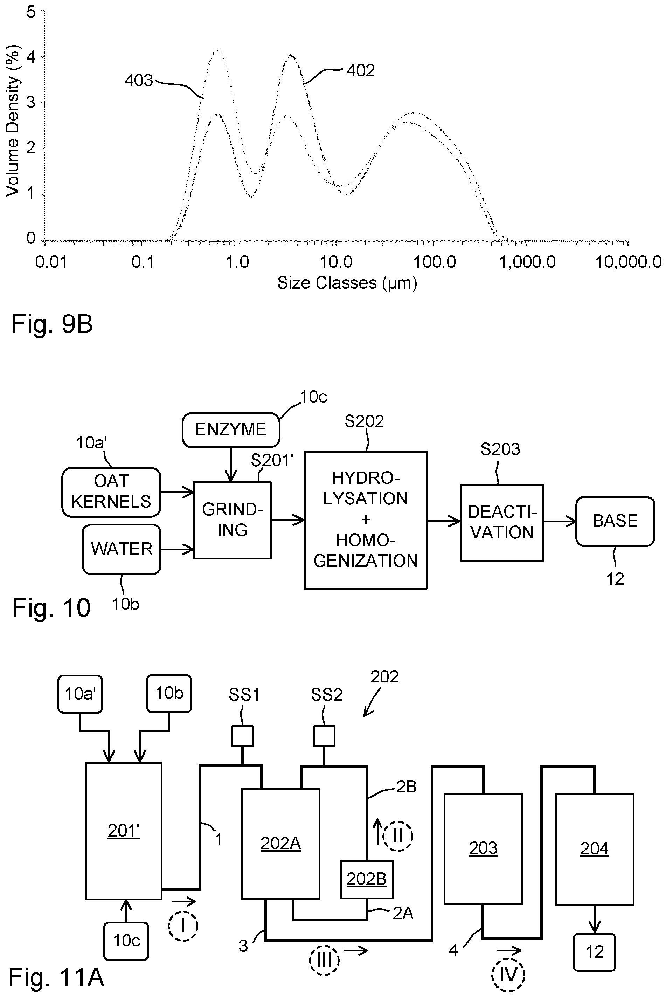

The Applicant has made significant efforts to further improve the properties of the liquid oat base, and the HPH product produced therefrom. It has been found that addition of one or more fiber-digesting enzymes to the slurry during the hydrolyzation time period (HTP) may cause a significant reduction of the particle size of the liquid oat base. The fiber-digesting enzymes may or may not be added concurrently with the enzyme(s) for saccharification of starch by hydrolysis. The respective fiber-digesting enzyme may be a carbohydrase causing saccharification of pentosans, beta-glucans, or xylans. Successful tests have been performed by adding a glucanase and/or a xylanase to the slurry. In the tests, Ultraflo^{®} XL from Novozymes was used as glucanase, and Ultraflo^{®} Max from Novozymes was used as xylanase. An example of a test result is shown in Fig. 9B, which is a plot of measured PSD as a function of particle size. Curve 402 represents an HPH product originating from a liquid oat base that was produced without addition of fiber-digesting enzymes. Curve 403 represents an HPH product originating from a liquid oat base that was produced with addition of the above-mentioned fiber-digesting enzymes. Clearly, the fiber-digesting enzymes cause a significant reduction in particle size. In the illustrated example, the addition of fiber-digesting enzymes primarily causes a transition from middle-sized particles (middle peak) to small-size particles (left peak).

As noted with reference to Fig. 3, the method M1 may alternatively use oat kernels. Fig. 10 is a sequence diagram of an example method for producing a liquid oat base 12 from oat kernels 10a'. The method in Fig. 10 differs from the method in Fig. 2A by the provision of a grinding step S201'. In the illustrated example, the grinding step S201' replaces the mixing step S201 in Fig. 2A. In a variant, not shown, a mixing step may be included subsequent to the grinding step S201'. After significant experimentation, the Applicant has found that if the grinding step S201' is implemented to produce a slurry with the same particle size (D90) as the mixing step S201 in Fig. 2A, this slurry will result in a corresponding liquid oat base if subjected to the downstream processing of Fig. 2A. In other words, the subsequent steps S202 and S203 in Fig. 10 may be the same as in the method of Fig. 2A.This also means that the foregoing description of downstream processing, desirable properties of the slurry before hydrolyzation, etc., is equally applicable to the method in Fig. 10.

Fig. 11A is a block diagram of a system, which is configured to perform the method M1 (Fig. 3) based on oat kernels 10a' and water 10b. The system is identical to the system in Fig. 4, except for a first sub-system 201' for processing the water 10b, the oat kernels 10a' and the one or more enzymes 10c into a slurry. In Fig. 11A, the first sub-system 201' comprises a grinding arrangement, which is operable to receive the kernels 10a', the water 10b and one or more enzymes 10c, and configured to grind the kernels 10a' to form a slurry with the water 10b. The water 10b and the one or more enzymes 10c may be added to the grinding arrangement at any suitable time during the grinding process. A supply line 1 extends from the first sub-system 201' to the hydrolyzation tank 202A in the second sub-system 202. No further description of the system is needed, since the second, third and fourth sub-systems 202, 203, 204 are identical to the corresponding sub-systems in Fig. 4.

It may be noted that the systems in Figs 4 and 11A may be combined if both whole oat flour and oat kernels are to be processed into the liquid oat base. A mixing device in sub-system 201 may be operated on the whole oat flour to produce a first slurry, and a grinding arrangement in sub-system 201' may be operated on oat kernels to produce a second slurry. The second sub-system 202 may receive and process the first and second slurries.

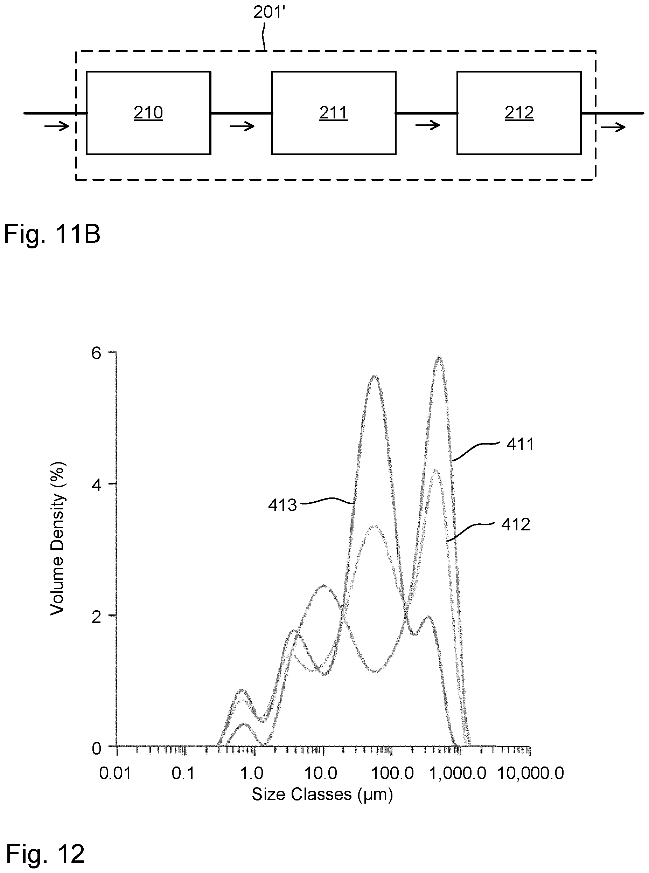

The Applicant has developed a technique for use in the first sub-system 201' to produce a slurry of adequate particle size from oat kernels and water. In this technique, a mixture of oat kernels and water is sequentially processed, first by disc milling, in one or more passes, and then by colloidal milling, in at least two passes. Fig. 11B shows an example implementation of this technique in the first sub-system 201'. Three mills 210, 211, 212 are connected in series to sequentially process a mixture of oat kernels and water. The first mill 210 is a disc mill with a hole size of 2-6 mm, and preferably 3-5 mm. The second mill 211, which is arranged to receive the ground mixture of kernels and water from the first mill 210, is a cross-toothed colloidal mill with a rotor-stator gap in a range of 0.5-1 mm. The third mill 212, which is arranged to receive the ground mixture of kernels and water from the second mill 211, is a cross-toothed colloidal mill with a rotor-stator gap in a range of 0.05-0.2 mm. The third mill 212 produces the slurry for further processing by the second sub-system 202. The one or more enzymes is preferably present with the water and oat kernels, when these are processed into a slurry as described herein.

Fig. 12 illustrates measured PSD during processing of oat kernels into a liquid oat base in the system of Fig. 11A. The enzymes 10c include both enzymes for saccharification of starch and fiber-digesting enzymes. Curve 411 is an average of samples taken at sampling port SS1, curve 412 is an average of samples taken at sampling port SS2 during a first pass of the slurry through the homogenizer 202B, and curve 413 is an average of samples taken at sampling port SS2 during a second pass of the slurry through the homogenizer 202B. By comparing curves 411 and 412, it is seen that the first pass results in a significant change of PSD in the slurry, while retaining a relatively large peak of larger particle sizes (to the right, centered at 500-600 µm). By comparing curves 412 and 413, it is seen that the second pass results in a significant shift towards smaller particle sizes. Notably, the second pass causes a transition from the peak at 500-600 µm to a peak at 50-60 µm. The experimental data in Fig. 12 clearly indicates that two passes through the homogenizer 202B is beneficial. A similar effect is shown in data from the system of Fig. 4 when processing of whole oat flour into a liquid oat base.

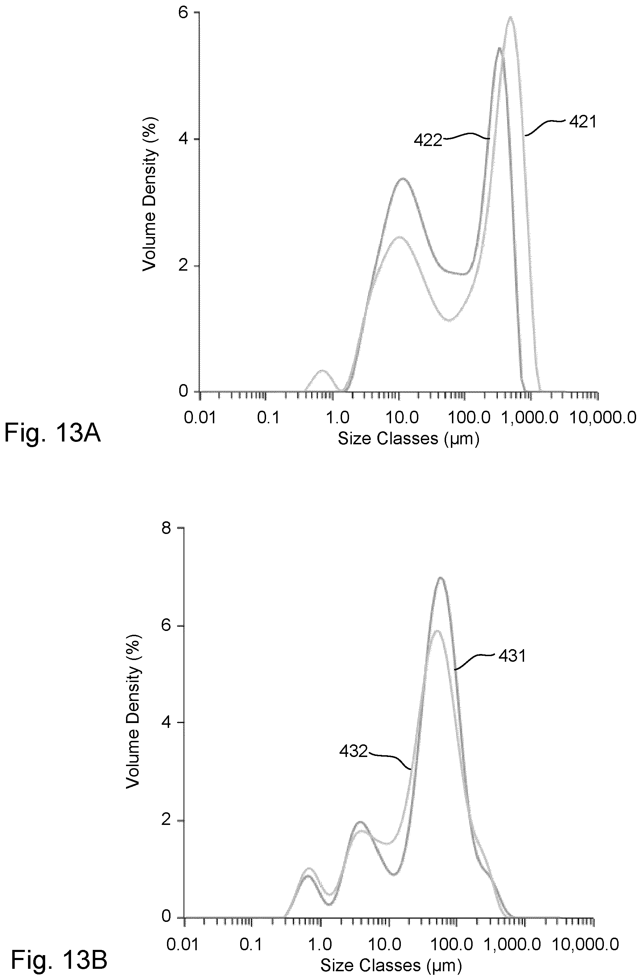

Fig. 13A illustrates measured PSD in the slurry at the sampling port SS1 in the system of Fig. 4 and the system of Fig. 11A. Curve 421 represents the PSD in a slurry produced by high-shear mixing of whole oat flour with water, and one or more enzymes, in the system of Fig. 4, and curve 422 represents the PSD in a slurry produced by operating the first sub-system 201' in FIG. 11B on a mixture of oat kernels, water and enzyme. As seen, the distributions of particle sizes are quite similar. This shows that the first sub-system 201 can be replaced by the first sub-system 201' when oat kernels are processed instead of whole oat flour.

Fig. 13B is a comparison of measured PSD in the slurry at the sampling port SS2 after two passes through the homogenizer 202B in the system of Fig. 4 and the system of Fig. 11A, respectively. The enzymes 10c that were added included both enzymes for saccharification of starch and fiber-digesting enzymes. The homogenizer 202B was operated with a backing pressure of 600 bar. Curve 431 represents the PSD in the slurry in the system of Fig. 4, and curve 432 represents the PSD in the slurry in the system of Fig. 11A using the grinding arrangement in Fig. 11B. As seen, the distributions of particle sizes are quite similar. This shows that liquid oat bases with similar properties may be generated from whole oat flour and oat kernels, respectively.

Various aspects of the proposed solution have been outlined in the foregoing. Any details and examples as provided may be combined in any way or form that is not clearly contradictory, or in accordance with any combination of the features of the clauses set out below.

C1. A method of manufacturing a liquid oat base for human consumption, said method comprising: providing (S21) oat raw material comprising at least one of oat kernels or whole oat flour; processing (S22) the oat raw material, water and one or more enzymes into a slurry; performing (S24), during a hydrolyzation time period and by the one or more enzymes, a hydrolyzation of the slurry; processing (S25) the slurry by high-pressure homogenization during at least part of the hydrolyzation time period; processing (S26), at an end of the hydrolyzation time period, the slurry for deactivation of the one or more enzymes; and obtaining (S27) the liquid oat base from the slurry.

C2. The method of C1, wherein the liquid oat base is manufactured to include at least 90%, 95% or 98% by weight of a solid content of the oat raw material.

C3. The method of C1 or C2, wherein the liquid oat base is manufactured without separation and removal of solid content from the slurry.

C4. The method of any preceding clause, wherein the liquid oat base has a particle size, given as D90, of less than 200 µm, 150 µm, or 100 µm.

C5. The method of any preceding clause, wherein the slurry, before the hydrolyzation, has a total solids content in a range of 8%-45% by weight, preferably 12%-20% by weight.

C6. The method of any preceding clause, wherein the slurry, before the hydrolyzation, has a particle size, given as D90, of less than 1000 µm, 900 µm, 800 µm, or 700 µm.

C7. The method of any preceding clause, wherein the slurry, before the hydrolyzation, has a particle size, given as D90, that is at least 350 µm, 400 µm, 450 µm, 500 µm, 550 µm, 600 µm, or 650 µm.

C8. The method of any preceding clause, wherein the slurry is processed by the high-pressure homogenization at a pressure of at least 300 bar (30 MPa), 400 (40 MPa) bar, 500 bar (50 MPa), or 600 bar (60 MPa).

C9. The method of C8, wherein said processing (S25) the slurry by high-pressure homogenization comprises: driving the slurry, at said pressure, through a homogenization gap (G) with a size of 50-250 µm.

C10. The method of any preceding clause, wherein said processing (S25) the slurry by high-pressure homogenization comprises: subjecting the slurry to a number of consecutive high-pressure homogenization operations, said number being at least two.

C11. The method of any preceding clause, wherein said processing (S25) the slurry by high-pressure homogenization comprises circulating a batch of said slurry through a high-pressure homogenizer (202B) during a circulation time period that corresponds to at least two passes of the batch through the high-pressure homogenizer (202B).

C12. The method of C11, wherein said circulating comprises driving the slurry on a flow path (2A, 2B) from a hydrolyzation tank (202A) through the high-pressure homogenizer (202B) back to the hydrolyzation tank (202A).

C13. The method of C11 or C12, wherein the circulation time period is set as a function of a size of the batch in the hydrolyzation tank (202A) and a flow rate of the slurry in the flow path (2A, 2B).

C14. The method of C13, wherein the circulation time period is at least twice a ratio of the size of the batch to the flow rate of the slurry.

C15. The method of any one of C12-C14, wherein said driving the slurry on the flow path (2A, 2B) comprises returning the slurry to a top portion of the hydrolyzation tank (202A) to reduce mixing of returned slurry from the flow path (2A, 2B) with existing slurry in the hydrolyzation tank (202A).

C16. The method of any one of C1-C11, wherein said circulating comprises driving the slurry of the batch on a first flow path (2A, 2B) from a first hydrolyzation tank (202A1) through the high-pressure homogenizer (202B) to a second hydrolyzation tank (202A2), and, when the batch is in the second hydrolyzation tank (202A2), driving the slurry of the batch on a second flow path (3A, 3B) through the high-pressure homogenizer (202B).

C17. The method of any preceding clause, wherein said processing (S25) the slurry by high-pressure homogenization is started with a time delay to a start of the hydrolyzation time period.

C18. The method of C17, wherein said time delay is at least 30 minutes, 40 minutes, or 50 minutes.

C19. The method of any preceding clause, wherein the hydrolyzation time period is at least 75 minutes, 90 minutes, or 105 minutes.

C20. The method of any preceding clause, wherein said one or more enzymes comprises one or more carbohydrases causing saccharification of starch by hydrolysis.

C21. The method of C20, wherein said one or more enzymes comprises at least one an alfa-amylase or a glucoamylase.

C22. The method of C20 or C21, wherein said one or more enzymes further comprises one or more carbohydrases causing saccharification of pentosan, beta-glucan, or xylan.

C23. The method of C22, wherein said one or more enzymes comprises at least one of a glucanase and a xylanase.

C24. The method of any preceding clause, wherein the raw material is a whole oat flour, and wherein said processing (S22) the oat raw material comprises mixing the whole oat flour with water in a high-shear mixer to form said slurry.

C25. The method of any preceding clause, wherein the raw material comprises oat kernels, and wherein said processing (S22) the oat raw material comprises sequentially processing a mixture of the oat raw material and water by disc milling, in one or more passes, and colloidal milling, in at least two passes.

C26. The method of C25, wherein said disc milling is performed in a disc mill (210) with a hole size of 2-6 mm, preferably 3-5 mm.

C27. The method of C25 or C26, wherein a first pass of said colloidal milling is performed in a cross-toothed colloidal mill (211) with a rotor-stator gap in a range of 0.5-1 mm, and a second pass of said colloidal milling is performed in a cross-toothed colloidal mill (212) with a rotor-stator gap in a range of 0.05-0.2 mm.

C28. A system for manufacturing a liquid oat base for human consumption, said system comprising: a first sub-system (201) configured to process oat raw material, water and one or more enzymes into a slurry, said oat raw material comprising at least one of oat kernels or whole oat flour; a second sub-system (202) comprising one or more tanks (202A, 202A1-202A4) for receiving the slurry from the first sub-system (201), said second sub-system (202) being configured to perform a hydrolyzation of the slurry, by use of one or more enzymes; a third sub-system (203) which is configured to receive the slurry from the second sub-system (202) and process the slurry for deactivation of the one or more enzymes; and a fourth sub-system (204) which is configured to receive the slurry from the third sub-system (203) and obtain the liquid oat base from the slurry, wherein the second sub-system (202) is further configured to pass the slurry through at least one high-pressure homogenizer (202B) during at least part of the hydrolyzation.

## Claims

1. A method of manufacturing a liquid oat base for human consumption, said method comprising:
providing (S21) oat raw material comprising at least one of oat kernels or whole oat flour,
processing (S22) the oat raw material, water and one or more enzymes into a slurry,
performing (S24), during a hydrolyzation time period and by the one or more enzymes, a hydrolyzation of the slurry,
processing (S25) the slurry by high-pressure homogenization during at least part of the hydrolyzation time period,
processing (S26), at an end of the hydrolyzation time period, the slurry for deactivation of the one or more enzymes, and
obtaining (S27) the liquid oat base from the slurry.

2. The method of claim 1, wherein the liquid oat base is manufactured to include at least 90%, 95% or 98% by weight of a solid content of the oat raw material.

3. The method of any preceding claim, wherein the liquid oat base has a particle size, given as D90, of less than 200 µm, 150 µm, or 100 µm.

4. The method of any preceding claim, wherein the slurry, before the hydrolyzation, has a particle size, given as D90, of less than 1000 µm, 900 µm, 800 µm, or 700 µm.

5. The method of any preceding claim, wherein the slurry, before the hydrolyzation, has a particle size, given as D90, that is at least 350 µm, 400 µm, 450 µm, 500 µm, 550 µm, 600 µm, or 650 µm.

6. The method of any preceding claim, wherein the slurry is processed by the high-pressure homogenization at a pressure of at least 300 bar (30 MPa), 400 (40 MPa) bar, 500 bar (50 MPa), or 600 bar (60 MPa).

7. The method of claim 6, wherein said processing (S25) the slurry by high-pressure homogenization comprises: driving the slurry, at said pressure, through a homogenization gap (G) with a size of 50-250 µm.

8. The method of any preceding claim, wherein said processing (S25) the slurry by high-pressure homogenization comprises: subjecting the slurry to a number of consecutive high-pressure homogenization operations, said number being at least two.

9. The method of any preceding claim, wherein said processing (S25) the slurry by high-pressure homogenization comprises circulating a batch of said slurry through a high-pressure homogenizer (202B) during a circulation time period that corresponds to at least two passes of the batch through the high-pressure homogenizer (202B).

10. The method of claim 9, wherein said circulating comprises driving the slurry on a flow path (2A, 2B) from a hydrolyzation tank (202A) through the high-pressure homogenizer (202B) back to the hydrolyzation tank (202A).

11. The method of claim 10, wherein the circulation time period is at least twice a ratio of the size of the batch to the flow rate of the slurry.

12. The method of any one of claims 10-11, wherein said driving the slurry on the flow path (2A, 2B) comprises returning the slurry to a top portion of the hydrolyzation tank (202A) to reduce mixing of returned slurry from the flow path (2A, 2B) with existing slurry in the hydrolyzation tank (202A).

13. The method of any one of claims 1-9, wherein said circulating comprises driving the slurry of the batch on a first flow path (2A, 2B) from a first hydrolyzation tank (202A1) through the high-pressure homogenizer (202B) to a second hydrolyzation tank (202A2), and, when the batch is in the second hydrolyzation tank (202A2), driving the slurry of the batch on a second flow path (3A, 3B) through the high-pressure homogenizer (202B).

14. The method of any preceding claim, wherein the hydrolyzation time period is at least 75 minutes, 90 minutes, or 105 minutes.

15. A system for manufacturing a liquid oat base for human consumption, said system comprising:
a first sub-system (201) configured to process oat raw material, water and one or more enzymes into a slurry, said oat raw material comprising at least one of oat kernels or whole oat flour,
a second sub-system (202) comprising one or more tanks (202A, 202A1-202A4) for receiving the slurry from the first sub-system (201), said second sub-system (202) being configured to perform a hydrolyzation of the slurry, by use the one or more enzymes,
a third sub-system (203) which is configured to receive the slurry from the second sub-system (202) and process the slurry for deactivation of the one or more enzymes, and
a fourth sub-system (204) which is configured to receive the slurry from the third sub-system (203) and obtain the liquid oat base from the slurry,
wherein the second sub-system (202) is further configured to pass the slurry through at least one high-pressure homogenizer (202B) during at least part of the hydrolyzation.
